(19) Europäisches Patentamt
European Patent Office
Office européen des brevets

(11) EP 3 162 835 B1

(12) # EUROPEAN PATENT SPECIFICATION

(45) Date of publication and mention of the grant of the patent:
**11.12.2019 Bulletin 2019/50**

(21) Application number: **15811102.1**

(22) Date of filing: **23.06.2015**

(51) Int Cl.:
***C08G 65/26*** *(2006.01)* ***B41J 2/01*** *(2006.01)*
***B41M 5/00*** *(2006.01)* ***C08F 2/50*** *(2006.01)*
***C08F 216/14*** *(2006.01)* ***C08G 59/20*** *(2006.01)*
***C09D 11/30*** *(2014.01)* ***C08G 65/18*** *(2006.01)*

(86) International application number:
**PCT/JP2015/068084**

(87) International publication number:
**WO 2015/199090 (30.12.2015 Gazette 2015/52)**

(54) **MONOMER COMPOSITION AND CURABLE COMPOSITION CONTAINING SAME**

MONOMERZUSAMMENSETZUNG UND HÄRTBARE ZUSAMMENSETZUNG DAMIT

COMPOSITION DE MONOMÈRE, ET COMPOSITION DURCISSABLE CONTENANT CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2014 JP 2014133060**

(43) Date of publication of application:
**03.05.2017 Bulletin 2017/18**

(73) Proprietor: **Daicel Corporation**
**Osaka-shi, Osaka 530-0011 (JP)**

(72) Inventors:
- **MIZUTA, Tomoya**
**Tokyo 108-8230 (JP)**
- **INOUE, Keizo**
**Himeji-shi**
**Hyogo 671-1283 (JP)**

(74) Representative: **Grünecker Patent- und Rechtsanwälte**
**PartG mbB**
**Leopoldstraße 4**
**80802 München (DE)**

(56) References cited:
**WO-A1-2014/046095** **JP-A- H0 229 428**
**JP-A- 2004 010 783** **JP-A- 2014 201 534**
**US-A- 4 009 182** **US-A1- 2004 259 971**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### Technical Field

The present invention according to claims 1 to 7 relates to a curable composition. The curable composition is advantageously used for UV-curable (ultraviolet-curable) inkjet inks, according to claims 8 to 10.

### Background Art

Inkjet recording is a technique in which ink droplets are ejected (jetted) onto a recording medium to form recording dots as printing. This technique does not require master plates and is advantageously used in small-quantity wide-variety printing applications. Known inkjet inks for use in the inkjet recording technique include cationically-curable inks and radically-curable inks.

The radically-curable inks have been widely used typically because these inks have rapid curability and can be derived from a wide variety of monomers. However, from the viewpoint of dischargeability, the inkjet recording technique employs low-viscosity inks, which allow oxygen in the air to readily diffuse/migrate into the inks. In addition, such inks, as being formed into small droplets upon printing, have large surface areas and are readily exposed to oxygen. Disadvantageously, therefore, the radically-curable inks significantly suffer from cure inhibition by oxygen and are inhibited from curing by oxygen, to bleed and/or to include large amounts of residual unreacted monomers which cause odors. Additionally disadvantageously, the radically-curable inks have poor substrate adhesion and require processing on the substrate surface so as to offer better adhesion.

In contrast, the cationically-curable inks do not suffer from cure inhibition by oxygen. In addition, these inks are known to have superior substrate adhesion as compared with the radically-curable inks. Patent Literature (PTL) 1, PTL 2, and PTL 3 each describe that a cationically-curable ink including a dispersion medium and a pigment can form an ink layer having excellent curability and excellent adhesion to the substrate (substrate adhesion), when monomers constituting the dispersion medium contain a vinyl ether compound having a cyclic ether skeleton in an amount of 30 weight percent or more of all monomers contained in the dispersion medium.

### Citation List

### Patent Literature

PTL 1: Japanese Unexamined Patent Application Publication (JP-A) No. 2005-154734
PTL 2: JP-A No. 2007-211098
PTL 3: JP-A No. 2007-211099

WO 2014/046095 A1 discloses a curable resin composition comprising a specific silicon compound, an epoxy and/or oxetane resin, and a curing agent. The curable resin composition is useful for application to a coating agent, an optical material and an electronic material.

US 4009182 A discloses a process for the preparation of a hydroxyoxetane.

### Summary of Invention

### Technical Problem

However, cationically-curable inks containing a vinyl ether compound having a cyclic ether skeleton in a large amount as described above were found to be practically unsuitable. This is because the vinyl ether compound having a cyclic ether skeleton tends to absorb moisture (water) and thereby causes the cationically-curable inks to be susceptible to cure inhibition by water and to undergo curing failure when used during humid periods and/or when absorbing moisture from the air during storage process.

Accordingly, the present invention has an object to provide a curable composition that has rapid curability and can be rapidly cured, even in the presence of oxygen and/or water, to form a cured product having excellent adhesion to a wide variety of substrates.

The present invention has another object to provide a UV-curable inkjet ink.

Solution to Problem

After intensive investigations to achieve the objects, the inventors of the present invention found a curable composition including a monomer composition that contains, instead of the vinyl ether compound having a cyclic ether skeleton, a specific oxetane compound in a specific amount; and found that the curable composition can be rapidly cured by ultraviolet irradiation, even in the presence of oxygen and/or water, to form a cured product having excellent adhesion to a wide variety of substrates (namely, has selectivity to a wide variety of substrates). The present invention has been made on the basis of these findings.

Specifically, the present invention provides, in an aspect, a curable composition comprising a monomer composition and a photoacid generator. The monomer composition contains at least one cationically curable monomer. The at least one cationically curable monomer includes at least one of 3-allyloxyoxetane and 3-(2-ethylhexyloxy)oxetane. The at least one of 3-allyloxyoxetane and 3-(2-ethylhexyloxy)oxetane is present in a total content of 5 weight percent or more of the total weight of the monomer composition.

In the monomer composition, the at least one cationically curable monomer may further include an epoxy compound.

In the monomer composition, the epoxy compound may be present in a content of 5 to 80 weight percent of the total weight of the monomer composition.

In the monomer composition, the at least one cationically curable monomer may further include a vinyl ether compound.

In the monomer composition, the vinyl ether compound may be present in a content of 5 to 80 weight percent of the total weight of the monomer composition.

The curable composition may further contain a sensitizer alone or in combination with a sensitizing auxiliary.

The curable composition may have a surface tension (at 25°C and 1 atmospheric pressure) of 10 to 50 mN/m and a viscosity (at 25°C and a shear rate of 10 (1/s)) of 1 to 1000 mPa·s.

The curable composition may be used in or for a UV-curable inkjet ink.

The present invention also provides, in another aspect, a UV-curable inkjet ink containing the curable composition and at least one selected from the group consisting of pigments and dyes.

The UV-curable inkjet ink may further contain a dispersant.

Specifically, the present invention relates to the followings.

(1) The present invention relates to a curable composition comprising a monomer composition and a photoacid generator. The monomer composition contains at least one cationically curable monomer. The at least one cationically curable monomer includes at least one of 3-allyloxyoxetane and 3-(2-ethylhexyloxy)oxetane. The at least one of 3-allyloxyoxetane and 3-(2-ethylhexyloxy)oxetane is present in a total content of 5 weight percent or more of the total weight of the monomer composition.

(2) In the monomer composition as defined in (1), the at least one cationically curable monomer may further include an epoxy compound.

(3) In the monomer composition as defined in (2), the epoxy compound may be present in a content of 5 to 80 weight percent of the total weight of the monomer composition.

(4) In the monomer composition as defined in any one of (1) to (3), the at least one cationically curable monomer may further include a vinyl ether compound.

(5) In the monomer composition as defined in (4), the vinyl ether compound may include a divinyl ether compound.

(6) In the monomer composition as defined in any one of (4) and (5), the vinyl ether compound may be present in a content of 5 to 80 weight percent of the total weight of the monomer composition.

(7) In the monomer composition as defined in any one of (2) to (6), the epoxy compound (B) and the vinyl ether compound (C) may be present in a total content of 5 to 80 weight percent of the total weight of the monomer composition.

(8) The curable composition according to any one of (1) to (7) may further contain a sensitizer alone or in combination with a sensitizing auxiliary.

(9) The curable composition according to any one of (1) to (8) may have a surface tension (at 25°C and 1 atmospheric pressure) of 10 to 50 mN/m and a viscosity (at 25°C and a shear rate of 10 (1/s)) of 1 to 1000 mPa·s.

(10) The curable composition according to any one of (1) to (9) may be used in a UV-curable inkjet ink.

(11) The present invention also relates to a UV-curable inkjet ink containing the curable composition according to any one of (1) to (9) and at least one selected from the group consisting of pigments and dyes.

(12) The UV-curable inkjet ink according to (11) may further contain a dispersant.

Advantageous Effects of Invention

The monomer composition for use in the present invention has the above configuration and, when incorporated with a photoacid generator, gives a curable composition as follows. This curable composition has a low viscosity and offers excellent dischargeability before ultraviolet irradiation. The curable composition can be rapidly cured by ultraviolet irradiation even in the presence of oxygen and/or water, to form a cured product having excellent adhesion to a wide variety of substrates. The curable composition resists deterioration in curability even when absorbing moisture (water) from the air during the storage process. Namely, the curable composition has excellent storage stability. In addition, the curable composition according to the present invention, as having excellent curability, less causes monomers to remain as unreacted, and significantly less causes odors derived from such unreacted monomers. Thus, the curable composition according to the present invention is advantageously usable for UV-curable inkjet inks.

The UV-curable inkjet ink according to the present invention includes the curable composition having the characteristic properties and, when used, can form an ink layer with extremely high definition in an air atmosphere at high speed, where the ink layer can be formed without limitations on humidity conditions and on substrates, while less causing odors. The UV-curable inkjet ink according to the present invention is therefore advantageously usable in the field of industrial printing.

Description of Embodiments

Oxetane Compound (A)

The monomer composition for use in the present invention contains, as a cationically curable monomer, at least one of 3-allyloxyoxetane and 3-(2-ethylhexyloxy)oxetane.

The monomer composition for use in the present invention may further contain one or more other oxetane compounds in addition to the at least one of 3-allyloxyoxetane and 3-(2-ethylhexyloxy)oxetane. However, the at least one of 3-allyloxyoxetane and 3-(2-ethylhexyloxy)oxetane may be present in a proportion of typically 10 weight percent or more, preferably 40 weight percent or more, and particularly preferably 70 weight percent or more, of the total weight of all oxetane compounds contained in the monomer composition. When both the two compounds are present, the term "proportion" refers to the total proportion of them. The monomer composition, if containing the at least one of 3-allyloxyoxetane and 3-(2-ethylhexyloxy)oxetane in a proportion less than the range, namely, if containing other oxetane compounds in a proportion greater than the range, tends to offer lower curability in the presence of water.

Non-limiting examples of the other oxetane compounds include compounds represented by Formula (a) (excluding 3-allyloxyoxetane and 3-(2-ethylhexyloxy)oxetane). The monomer composition may contain each of them alone or in combination. Formula (a) is expressed as follows:

[Chem. 1]

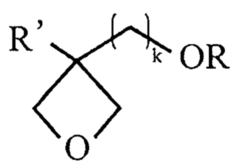

(a)

where R' is selected from hydrogen and ethyl; R represents a monovalent organic group; and k represents an integer of 0 or more.

The monovalent organic group as R includes monovalent hydrocarbon groups, monovalent heterocyclic groups, substituted oxycarbonyl (such as alkoxycarbonyl, aryloxycarbonyl, aralkyloxycarbonyl, and cycloalkyloxycarbonyl), substituted carbamoyl (such as N-alkylcarbamoyl and N-arylcarbamoyl), acyl (e.g., aliphatic acyl such as acetyl; and aromatic acyl such as benzoyl), and monovalent groups each including two or more of them bonded to each other through a single bond or a linkage group.

The monovalent hydrocarbon groups include monovalent aliphatic hydrocarbon groups, monovalent alicyclic hydrocarbon groups, and monovalent aromatic hydrocarbon groups.

Non-limiting examples of the monovalent aliphatic hydrocarbon groups include alkyl containing 1 to 20 carbon atoms, such as methyl, ethyl, propyl, isopropyl, butyl, isobutyl, s-butyl, t-butyl, pentyl, hexyl, decyl, and dodecyl, of which alkyl containing 1 to 10 carbon atoms is preferred, and alkyl containing 1 to 3 carbon atoms is particularly preferred; alkenyl containing 2 to 20 carbon atoms, such as vinyl, allyl, methallyl, 1-propenyl, isopropenyl, 1-butenyl, 2-butenyl, 3-butenyl, 1-pentenyl, 2-pentenyl, 3-pentenyl, 4-pentenyl, and 5-hexenyl, of which alkenyl containing 2 to 10 carbon atoms

is preferred, and alkenyl containing 2 or 3 carbon atoms is particularly preferred; and alkynyl containing 2 to 20 carbon atoms, such as ethynyl and propynyl, of which alkynyl containing 2 to 10 carbon atoms is preferred, and alkynyl containing 2 or 3 carbon atoms is particularly preferred.

Non-limiting examples of the monovalent alicyclic hydrocarbon groups include cycloalkyl containing 3 to 20 members, such as cyclopropyl, cyclobutyl, cyclopentyl, cyclohexyl, and cyclooctyl, of which cycloalkyl containing 3 to 15 members is preferred, and cycloalkyl containing 5 to 8 members is particularly preferred; cycloalkenyl containing 3 to 20 members, such as cyclopentenyl and cyclohexenyl, of which cycloalkenyl containing 3 to 15 members is preferred, and cycloalkenyl containing 5 to 8 members is particularly preferred; and bridged hydrocarbon groups such as bicycloheptyl, bicycloheptenyl, perhydronaphth-1-yl, norbornyl, adamantyl, and tetracyclo [$4.4.0.1^{2,5}.1^{7,10}$] dodec-3-yl.

Non-limiting examples of the monovalent aromatic hydrocarbon groups include aromatic hydrocarbon groups containing 6 to 14 carbon atoms, such as phenyl and naphthyl, of which those containing 6 to 10 carbon atoms are preferred.

The hydrocarbon groups may each have one or more of various substituents. Non-limiting examples of the substituents include halogen, oxo, hydroxy, substituted oxy (such as alkoxy, aryloxy, aralkyloxy, and acyloxy), carboxy, substituted oxycarbonyl (such as alkoxycarbonyl, aryloxycarbonyl, and aralkyloxycarbonyl), substituted or unsubstituted carbamoyl, cyano, nitro, substituted or unsubstituted amino, sulfo, and heterocyclic groups. The hydroxy and carboxy may each be protected with a protecting group which is commonly used in the field of organic synthesis. One or more aromatic or non-aromatic heterocyclic rings may be condensed to each of rings of the alicyclic hydrocarbon groups and the aromatic hydrocarbon groups.

The monovalent heterocyclic groups are groups resulting from removing one hydrogen atom each from the structural formulae of heterocyclic rings. Non-limiting examples of the heterocyclic rings include oxygen-containing heterocyclic rings, sulfur-containing heterocyclic rings, and nitrogen-containing heterocyclic rings, where oxygen, sulfur, and nitrogen each serve as a heteroatom. Non-limiting examples of the oxygen-containing heterocyclic rings include 4-membered rings such as oxetane ring; 5-membered rings such as furan, tetrahydrofuran, oxazole, isoxazole, and γ-butyrolactone rings; 6-membered rings such as 4-oxo-4H-pyran, tetrahydropyran, and morpholine rings; fused rings such as benzofuran, isobenzofuran, 4-oxo-4H-chromene, chroman, and isochroman rings; and bridged rings such as 3-oxatricyclo[$4.3.1.1^{4,8}$]undecan-2-one and 3-oxatricyclo[$4.2.1.0^{4,8}$]nonan-2-one rings. Non-limiting examples of the sulfur-containing heterocyclic rings include 5-membered rings such as thiophene, thiazole, isothiazole, and thiadiazole rings; 6-membered rings such as 4-oxo-4H-thiopyran ring; and fused rings such as benzothiophene ring. Non-limiting examples of the nitrogen-containing heterocyclic rings include 5-membered rings such as pyrrole, pyrrolidine, pyrazole, imidazole, and triazole rings; 6-membered rings such as pyridine, pyridazine, pyrimidine, pyrazine, piperidine, and piperazine rings; and fused rings such as indole, indoline, quinoline, acridine, naphthyridine, quinazoline, and purine rings. The monovalent heterocyclic groups may each have one or more substituents. Non-limiting examples of the substituents include the substituents which the hydrocarbon groups may have; as well as alkyl (including $C_1$-$C_4$ alkyl such as methyl and ethyl), cycloalkyl, and aryl (such as phenyl and naphthyl).

Non-limiting examples of the linkage group include carbonyl (-CO-), ether bond (-O-), thioether bond (-S-), ester bond (-COO-), amido bond (-CONH-), carbonate bond (-OCOO-), silyl bond (-Si-), and groups each including two or more of these groups linked to each other.

The number k represents an integer of 0 or more and is typically 0 to 20, and preferably 0 or 1.

Non-limiting examples of the compounds represented by Formula (a) include 3-methoxyoxetane, 3-ethoxyoxetane, 3-propoxyoxetane, 3-isopropoxyoxetane, 3-(n-butoxy)oxetane, 3-isobutoxyoxetane, 3-(s-butoxy)oxetane, 3-(t-butoxy)oxetane, 3-pentyloxyoxetane, 3-hexyloxyoxetane, 3-heptyloxyoxetane, 3-octyloxyoxetane, 3-(1-propenyloxy)oxetane, 3-cyclohexyloxyoxetane, 3-(4-methylcyclohexyloxy)oxetane, 3-[(2-perfluorobutyl)ethoxy]oxetane, 3-phenoxyoxetane, 3-(4-methylphenoxy)oxetane, 3-(3-chloro-1-propoxy)oxetane, 3-(3-bromo-1-propoxy)oxetane, 3-(4-fluorophenoxy)oxetane, and compounds represented by Formulae (a-1) to (a-13):

[Chem. 2]

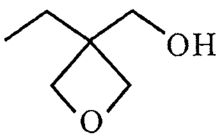

(a-1)

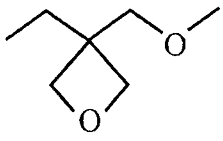

(a-2)

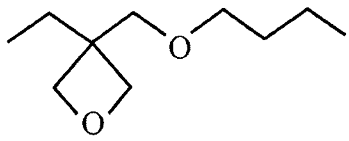

(a-3)

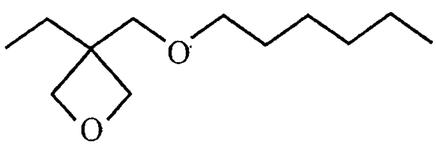

(a-4)

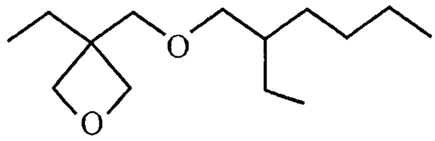

(a-5)

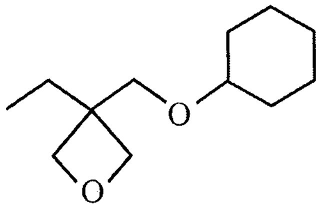

(a-6)

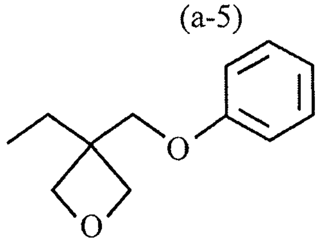

(a-7)

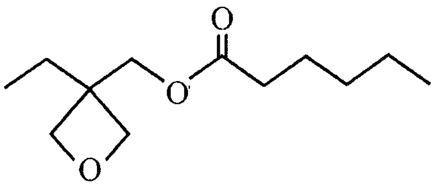

(a-8)

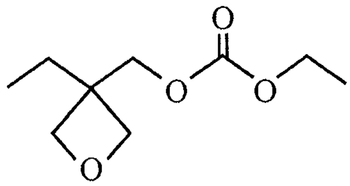

(a-9)

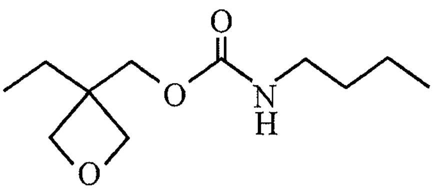

(a-10)

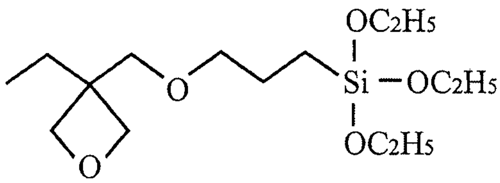

(a-11)

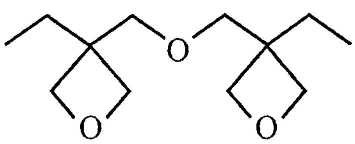

(a-12)

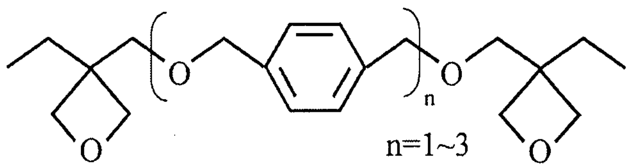

n=1~3

(a-13)

The other oxetane compounds may also be selected from commercial products available typically as ARON OXETANE OXT-101, ARON OXETANE OXT-121, ARON OXETANE OXT-212, ARON OXETANE OXT-211, ARON OXETANE OXT-213, ARON OXETANE OXT-221, and ARON OXETANE OXT-610 (each from Toagosei Co., Ltd.).

Epoxy Compound (B)

The monomer composition for use in the present invention may further contain, as a cationically curable monomer, an epoxy compound. The monomer composition, when containing the epoxy compound, contributes to better substrate adhesion and higher curing rate in the presence of water.

Non-limiting examples of the epoxy compound include aromatic glycidyl ether epoxy compounds; alicyclic

glycidyl ether epoxy compounds such as hydrogenated bisphenol-A diglycidyl ether; aliphatic glycidyl ether epoxy compounds; glycidyl ester epoxy compounds; glycidylamine epoxy compounds; epoxy compounds containing a cyclohexene oxide group (hereinafter also referred to as "cycloaliphatic epoxy compounds"); and epoxy-modified siloxane compounds. The monomer composition may contain each of different epoxy compounds alone or in combination.

The monomer composition for use in the present invention preferably contains such a cycloaliphatic epoxy compound. In particular, the monomer composition more preferably contains the cycloaliphatic epoxy compound in an amount of 30 weight percent or more, particularly preferably 50 weight percent or more, and most preferably 80 weight percent or more, of the total weight of all epoxy compounds contained in the monomer composition. This is preferred because the monomer composition can form a cured product having excellent substrate adhesion and, particularly when used in an inkjet ink, can give a beautiful print that resists scratching and separation and can be maintained over a long time.

Non-limiting examples of the cycloaliphatic epoxy compounds include compounds represented by Formula (b):

[Chem. 3]

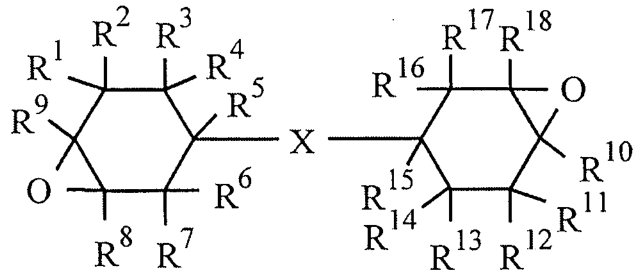

(b)

In Formula (b), $R^1$ to $R^{18}$ are each, identically or differently, selected from hydrogen, halogen, a hydrocarbon group optionally containing oxygen or halogen, and optionally substituted alkoxy.

Non-limiting examples of the halogen as $R^1$ to $R^{18}$ include fluorine, chlorine, bromine, and iodine.

Examples of the hydrocarbon group as $R^1$ to $R^{18}$ are as with R in Formula (a).

Non-limiting examples of the hydrocarbon group optionally containing oxygen or halogen as $R^1$ to $R^{18}$ include groups corresponding to the above-mentioned hydrocarbon groups, except with an oxygen-containing group or a halogen atom replacing at least one hydrogen atom each in the hydrocarbon groups. Non-limiting examples of the oxygen-containing group include hydroxy; hydroperoxy; $C_1$-$C_{10}$ alkoxy such as methoxy, ethoxy, propoxy, isopropyloxy, butoxy, and isobutyloxy; $C_2$-$C_{10}$ alkenyloxy such as allyloxy; tolyloxy, naphthyloxy, and other $C_6$-$C_{14}$ aryloxy which may have one or more substituents selected from $C_1$-$C_{10}$ alkyl, $C_2$-$C_{10}$ alkenyl, halogen, and $C_1$-$C_{10}$ alkoxy; $C_7$-$C_{18}$ aralkyloxy such as benzyloxy and phenethyloxy; $C_1$-$C_{10}$ acyloxy such as acetyloxy, propionyloxy, (meth)acryloyloxy, and benzoyloxy; $C_1$-$C_{10}$ alkoxycarbonyl such as methoxycarbonyl, ethoxycarbonyl, propoxycarbonyl, and butoxycarbonyl; phenoxycarbonyl, tolyloxycarbonyl, naphthyloxycarbonyl, and other $C_6$-$C_{14}$ aryloxycarbonyl which may have one or more substituents selected from $C_1$-$C_{10}$ alkyl, $C_2$-$C_{10}$ alkenyl, halogen, and $C_1$-$C_{10}$ alkoxy; $C_7$-$C_{18}$ aralkyloxycarbonyl such as benzyloxycarbonyl; epoxy-containing groups such as glycidyloxy; oxetanyl-containing groups such as ethyloxetanyloxy; $C_1$-$C_{10}$ acyl such as acetyl, propionyl, and benzoyl; isocyanato; sulfo; carbamoyl; oxo; and groups each including two or more of them bonded through a single bond or a linkage group such as $C_1$-$C_{10}$ alkylene.

Non-limiting examples of the alkoxy as $R^1$ to $R^{18}$ include $C_1$-$C_{10}$ alkoxy such as methoxy, ethoxy, propoxy, isopropyloxy, butoxy, and isobutyloxy.

Non-limiting examples of the substituents which the alkoxy may have include halogen, hydroxy, $C_1$-$C_{10}$ alkoxy, $C_2$-$C_{10}$ alkenyloxy, $C_6$-$C_{14}$ aryloxy, $C_1$-$C_{10}$ acyloxy, mercapto, $C_1$-$C_{10}$ alkylthio, $C_2$-$C_{10}$ alkenylthio, $C_6$-$C_{14}$ arylthio, $C_7$-$C_{18}$ aralkylthio, carboxy, $C_1$-$C_{10}$ alkoxycarbonyl, $C_6$-$C_{14}$ aryloxycarbonyl, $C_7$-$C_{18}$ aralkyloxycarbonyl, amino, mono- or di-($C_1$-$C_{10}$ alkyl) amino, $C_1$-$C_{10}$ acylamino, epoxy-containing groups, oxetanyl-containing groups, $C_1$-$C_{10}$ acyl, oxo, and groups each including two or more of them bonded to each other through a single bond or a linkage group such as $C_1$-$C_{10}$ alkylene.

In Formula (b), X is selected from a single bond and a linkage group. Non-limiting examples of the linkage group include divalent hydrocarbon groups, alkenylene groups with part or all of carbon-carbon double bond(s) being epoxidized, carbonyl (-CO-), ether bond (-O-), ester bond (-COO-), carbonate (-O-CO-O-), amido (-CONH-), and groups each including two or more of them linked to each other.

Non-limiting examples of the divalent hydrocarbon groups include $C_1$-$C_{18}$ linear or branched alkylene and $C_3$-$C_{18}$ divalent alicyclic hydrocarbon groups. Non-limiting examples of the $C_1$-$C_{18}$ linear or branched alkylene include methylene, methylmethylene, dimethylmethylene, ethylene, propylene, and trimethylene. Non-limiting examples of the

$C_3$-$C_{18}$ divalent alicyclic hydrocarbon groups include cycloalkylene (including cycloalkylidene), such as 1,2-cyclopentylene, 1,3-cyclopentylene, cyclopentylidene, 1,2-cyclohexylene, 1,3-cyclohexylene, 1,4-cyclohexylene, and cyclohexylidene.

The alkenylene with part or all of carbon-carbon double bond(s) being epoxidized is hereinafter also referred to as "epoxidized alkenylene". Non-limiting examples of the alkenylene moiety in the epoxidized alkenylene include $C_2$-$C_8$ linear or branched alkenylene such as vinylene, propenylene, 1-butenylene, 2-butenylene, butadienylene, pentenylene, hexenylene, heptenylene, and octenylene. In particular, the epoxidized alkenylene is preferably alkenylene with all carbon-carbon double bond(s) being epoxidized, and more preferably $C_2$-$C_4$ alkenylene with all carbon-carbon double bond(s) being epoxidized.

Representative, but non-limiting examples of the compounds represented by Formula (b) include (3,4,3',4'-diepoxy)bicyclohexyl, bis(3,4-epoxycyclohexylmethyl) ether, 1,2-epoxy-1,2-bis(3,4-epoxycyclohex-1-yl)ethane, 2,2-bis(3,4-epoxycyclohex-1-yl)propane, 1,2-bis(3,4-epoxycyclohex-1-yl)ethane, and compounds represented by Formulae (b-1) to (b-8) below. In Formulae (b-5) and (b-7), $n^1$ and $n^2$ each independently represent an integer of 1 to 30. In Formula (b-5), L is $C_1$-$C_8$ linear or branched alkylene.

[Chem. 4]

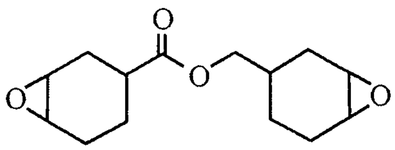

(b-1)

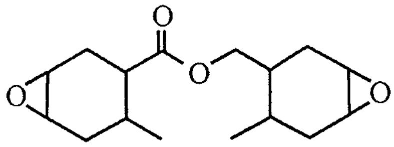

(b-2)

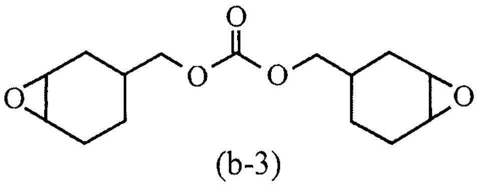

(b-3)

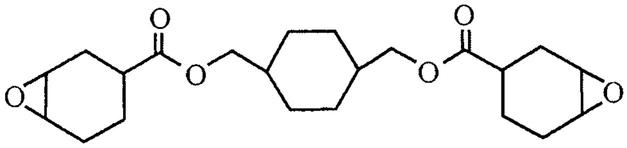

(b-4)

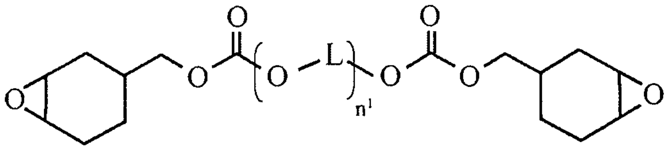

(b-5)

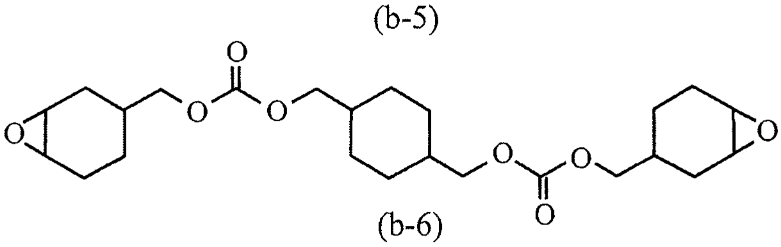

(b-6)

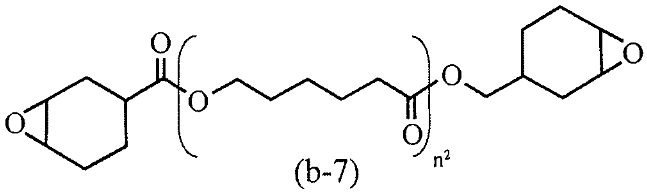

(b-7)

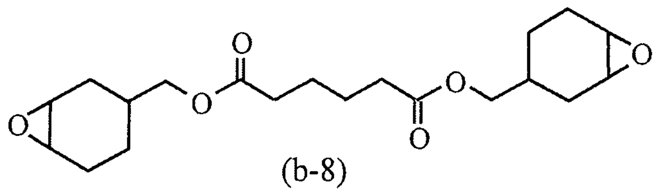

(b-8)

In addition to the compounds represented by Formula (b), the cycloaliphatic epoxy compounds also include compounds containing an alicyclic ring and two or more epoxy groups in the molecule, with one of the two or more epoxy groups being a cyclohexene oxide group, such as one represented by Formula (b-9):

[Chem. 5]

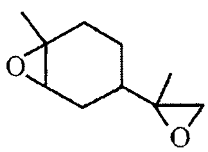

(b-9)

The cycloaliphatic epoxy compounds also include cycloaliphatic epoxy compounds each containing three or more cyclohexene oxide groups, as represented by Formulae (b-10) and (b-11) below; and cycloaliphatic epoxy compounds each containing one cyclohexene oxide group, but being devoid of other epoxy groups, as represented by

Formulae (b-12) to (b-14) below. In Formulae (b-10) and (b-11), $n^3$ to $n^8$ each represent, identically or differently, an integer of 1 to 30. In Formula (b-14), $R^{19}$ and $R^{20}$ each represent, identically or differently, $C_1$-$C_{31}$ linear or branched alkyl.

[Chem. 6]

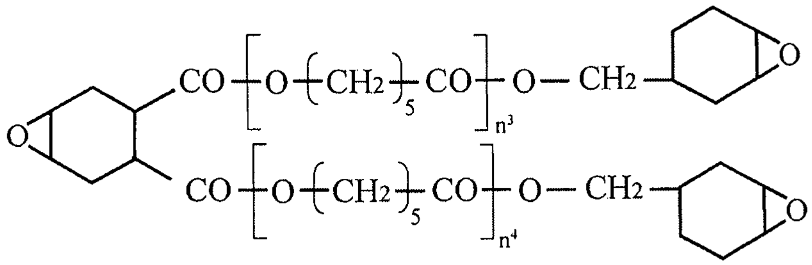

(b-10)

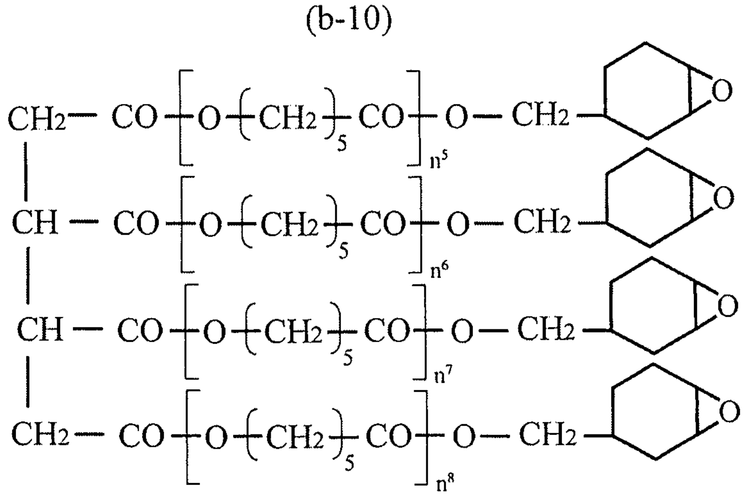

(b-11)

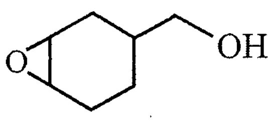

(b-12)

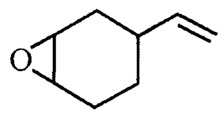

(b-13)

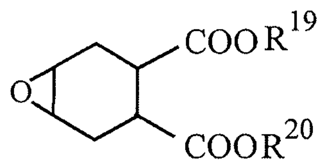

(b-14)

As the epoxy compound (B) for use in the present invention, the monomer composition preferably contains a compound represented by Formula (b) containing two cyclohexene oxide groups per molecule, and particularly preferably contains 3,4-epoxycyclohexylmethyl (3,4-epoxy)cyclohexanecarboxylate represented by Formula (b-1). This is preferred, in particular, for excellent adhesion to the substrate (such as glass).

When desired to form a cured product having high surface hardness and satisfactory heat resistance, the monomer composition may contain an epoxy-modified siloxane compound as the epoxy compound (B).

Non-limiting examples of the epoxy-modified siloxane compound include epoxy-modified polyorganosilsesquioxanes and epoxy-modified silicones. The monomer composition may contain each of them alone or in combination.

Non-limiting examples of the epoxy-modified polyorganosilsesquioxanes include compounds containing any of constitutional units represented by Formula (b-15) and constitutional units represented by Formula (b-16), where the compounds include compounds having any of random structures, cage-like structures, and ladder-like structures.

[Chem. 7]

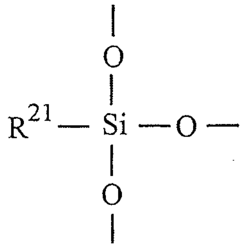

(b-15)

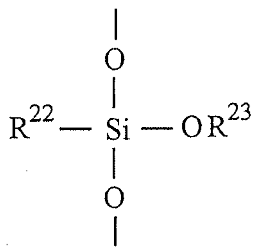

(b-16)

The epoxy-modified silicones include compounds having a cyclic structure and compounds having a chain structure. The epoxy-modified silicones having a cyclic structure are represented typically by Formula (b-17); and the epoxy-modified silicones having a chain structure are represented typically by Formula (b-18):

[Chem. 8]

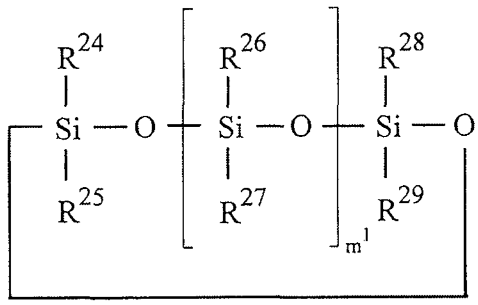

(b-17)

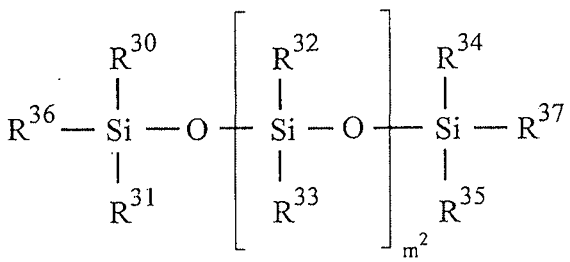

(b-18)

In the formulae, $R^{21}$ to $R^{37}$ are, identically or differently in each occurrence, selected from hydrogen and a hydrocarbon group optionally containing an oxirane ring. Examples of the hydrocarbon group are as with R in Formula (a). The numbers $m^1$ in Formula (b-17) and $m^2$ in Formula (b-18) each represent, identically or differently, an integer of 1 or more. When $m^1$ is an integer of 2 or more, $m^1$ occurrences of $R^{26}$ and $m^1$ occurrences of $R^{27}$ in (b-17) may each be identical or different. When $m^2$ is an integer of 2 or more, $m^2$ occurrences of $R^{32}$ and $m^2$ occurrences of $R^{33}$ in (b-18) may each be identical or different. However, at least one of $R^{21}$ to $R^{23}$ in the polyorganosilsesquioxanes, at least one of $R^{24}$ to $R^{29}$ in the silicones having a cyclic structure, and at least one of $R^{30}$ to $R^{37}$ in the silicones having a chain structure are each independently an oxirane-ring-containing hydrocarbon group. Non-limiting examples of the oxirane-ring-containing hydrocarbon group include hydrocarbon groups containing a cyclohexene oxide group, and hydrocarbon groups containing a glycidyl group.

The epoxy-modified siloxane compound may be present in a content of typically 1 to 100 weight percent of the total weight of all epoxy compounds contained in the monomer composition. The upper limit of the content is preferably 80 weight percent, particularly preferably 70 weight percent, and most preferably 60 weight percent. The lower limit of the content is preferably 5 weight percent, particularly preferably 10 weight percent, and most preferably 20 weight percent.

Vinyl Ether Compound (C)

The monomer composition for use in the present invention may further contain, as a cationically curable monomer, a vinyl ether compound (C).
Non-limiting examples of the vinyl ether compound include compounds represented by Formula (c):

$$R''\text{-}(O\text{-}CH{=}CH_2)_t \qquad (c)$$

where R" is selected from a t-valent hydrocarbon group, a t-valent heterocyclic group, and a t-valent group including two or more of these groups bonded to each other through a single bond or a linkage group; and t represents an integer of 1 or more.
Examples of monovalent hydrocarbon groups and monovalent heterocyclic groups, of t-valent hydrocarbon groups and t-valent heterocyclic groups, and examples of the linkage group are as with R in Formula (a). Examples of the t-valent hydrocarbon group and heterocyclic group include groups resulting from removing "t - 1" hydrogen atom(s) each from the structural formulae of the monovalent hydrocarbon groups.
Concrete, but non-limiting examples of the vinyl ether compound include methyl vinyl ether, ethyl vinyl ether, n-propyl vinyl ether, allyl vinyl ether, isopropyl vinyl ether, n-butyl vinyl ether, isobutyl vinyl ether, t-butyl vinyl ether, n-pentyl vinyl ether, isopentyl vinyl ether, t-pentyl vinyl ether, n-hexyl vinyl ether, isohexyl vinyl ether, 2-ethylhexyl vinyl ether, n-heptyl vinyl ether, n-octyl vinyl ether, nonyl vinyl ether, decyl vinyl ether, dodecyl vinyl ether, hexadecyl vinyl ether, octadecyl vinyl ether, ethoxymethyl vinyl ether, 2-methoxyethyl vinyl ether, 2-ethoxyethyl vinyl ether, 2-butoxyethyl vinyl ether, acetoxymethyl vinyl ether, 2-acetoxyethyl vinyl ether, 3-acetoxypropyl vinyl ether, 4-acetoxybutyl vinyl ether, 4-ethoxybutyl vinyl ether, 2-(2-methoxyethoxy)ethyl vinyl ether, 3-hydroxypropyl vinyl ether, 4-hydroxybutyl vinyl ether, 5-hydroxypentyl vinyl ether, 6-hydroxyhexyl vinyl ether, diethylene glycol monovinyl ether, diethylene glycol methyl vinyl ether, diethylene glycol ethyl vinyl ether, triethylene glycol monovinyl ether, tetraethylene glycol monovinyl ether, polyethylene glycol monovinyl ethers, propylene glycol monovinyl ether, dipropylene glycol monovinyl ether, tripropylene glycol monovinyl ether, polypropylene glycol monovinyl ethers, 4-hydroxycyclohexyl vinyl ether, cyclohexyldimethanol monovinyl ether, trimethylolpropane monovinyl ether, ethylene-oxide-added trimethylolpropane monovinyl ether, pentaerythritol monovinyl ether, ethylene-oxide-added pentaerythritol monovinyl ether, cyclohexyl vinyl ether, cyclohexylmethyl vinyl ether, cyclohexylethyl vinyl ether, menthyl vinyl ether, tetrahydrofurfuryl vinyl ether, norbornenyl vinyl ether, 1-adamantyl vinyl ether, 2-adamantyl vinyl ether, phenyl vinyl ether, benzyl vinyl ether, 1-naphthyl vinyl ether, 2-naphthyl vinyl ether, glycidyl vinyl ether, diethylene glycol ethyl vinyl ether, triethylene glycol methyl vinyl ether, divinyl ether, ethylene glycol divinyl ether, diethylene glycol divinyl ether, triethylene glycol divinyl ether, tetraethylene glycol divinyl ether, polyethylene glycol divinyl ethers, propylene glycol divinyl ether, dipropylene glycol divinyl ether, tripropylene glycol divinyl ether, polypropylene glycol divinyl ethers, butanediol divinyl ethers, neopentyl glycol divinyl ether, hexanediol divinyl ethers, nonanediol divinyl ethers, hydroquinone divinyl ether, 1,4-cyclohexanediol divinyl ether, 1,4-cyclohexanedimethanol divinyl ether, trimethylolpropane divinyl ether, ethylene-oxide-added trimethylolpropane divinyl ether, pentaerythritol divinyl ether, ethylene-oxide-added pentaerythritol divinyl ether, trimethylolpropane trivinyl ether, ethylene-oxide-added trimethylolpropane trivinyl ether, pentaerythritol trivinyl ether, ethylene-oxide-added pentaerythritol trivinyl ether, pentaerythritol tetravinyl ether, ethylene-oxide-added pentaerythritol tetravinyl ether, ditrimethylolpropane tetravinyl ether, and dipentaerythritol hexavinyl ether. The monomer composition may contain each of them alone or in combination.

Monomer Composition

The monomer composition for use in the present invention contains at least one cationically curable monomer. The at least one cationically curable monomer includes at least one of 3-allyloxyoxetane and 3-(2-ethylhexyloxy)oxetane.
The at least one of 3-allyloxyoxetane and 3-(2-ethylhexyloxy)oxetane is present in a content of 5 weight percent or more, preferably 10 weight percent or more, more preferably 25 weight percent or more, furthermore preferably 30 weight percent or more, particularly preferably 40 weight percent or more, and most preferably 45 weight percent or more, of the total weight of the monomer composition (the total weight of all cationically curable monomers contained in the monomer composition). When both the two compounds are present, the term "content" refers to the total content of them. The upper limit of the content is typically 80 weight percent, and is, for excellent curability in the presence of water, preferably 70 weight percent, and most preferably 50 weight percent. Assume that the monomer composition containing the at least one of 3-allyloxyoxetane and 3-(2-ethylhexyloxy)oxetane in a content within the range is incorporated with a photoacid generator. This gives a curable composition that can be rapidly cured, even in the presence of water, to give a cured product having excellent substrate adhesion.
All the oxetane compounds (A) including at least one of 3-allyloxyoxetane and 3-(2-ethylhexyloxy)oxetane may be present in a content of typically 5 to 90 weight percent, preferably 10 to 70 weight percent, and particularly preferably

20 to 70 weight percent, of the total weight of the monomer composition (the total weight of all cationically curable monomers contained in the monomer composition).

The monomer composition for use in the present invention may contain an epoxy compound (B) (in particular, a cycloaliphatic epoxy compound). The monomer composition may contain the epoxy compound (B) in a content of typically 5 to 80 weight percent, preferably 10 to 70 weight percent, and particularly preferably 20 to 60 weight percent, of the total weight of the monomer composition (the total weight of all cationically curable monomers contained in the monomer composition). Advantageously, the monomer composition, when containing the epoxy compound (B) in a content within the range, can be rapidly cured even in the presence of water, to give a cured product having excellent substrate adhesion.

The monomer composition for use in the present invention may contain a vinyl ether compound (C). The monomer composition may contain the vinyl ether compound (C) in a content of typically 5 to 80 weight percent, preferably 10 to 70 weight percent, and particularly preferably 20 to 60 weight percent, of the total weight of the monomer composition (the total weight of all cationically curable monomers contained in the monomer composition). Advantageously, the monomer composition, when containing the vinyl ether compound (C) in a content within the range, can offer rapid curability.

The epoxy compound (B) and the vinyl ether compound (C) may be present in a total content of typically 5 to 80 weight percent, preferably 10 to 70 weight percent, particularly preferably 20 to 60 weight percent, and most preferably 30 to 60 weight percent, of the total weight of the monomer composition according to the present invention (the total weight of all cationically curable monomers contained in the monomer composition). Advantageously, the monomer composition, when having a total content of the epoxy compound (B) and the vinyl ether compound (C) within the range, can be rapidly cured, even in the presence of water, to give a cured product having excellent substrate adhesion.

The monomer composition for use in the present invention may further contain one or more other cationically curable monomers than the oxetane compounds (A), the epoxy compounds (B), and the vinyl ether compounds (C). Non-limiting examples of such other cationically curably monomers include oxolane compounds, cyclic acetal compounds, cyclic lactone compounds, thiirane compounds, thietane compounds, spiro ortho ester compounds which are reaction products between an epoxy compound and a lactone, ethylenically unsaturated compounds, cyclic ether compounds, cyclic thioether compounds, ethylenically unsaturated compounds (such as vinyl compound), and derivatives of these compounds. The other cationically curable monomers may be present in a content of 30 weight percent or less, and preferably 20 weight percent or less, of the total weight of the monomer composition (the total weight of all cationically curable monomers contained in the monomer composition).

Assume that the monomer composition for use in the present invention contains two or more different cationically curable monomers. The monomer composition in this case can be produced by uniformly mixing the cationically curable monomers using a commonly known mixing device. Non-limiting examples of the mixing device include planetary centrifugal mixers (rotation/revolution mixing and deaeration machines), homogenizers, planetary mixers, triple roll mills, and bead mills. The two or more different cationically curable monomers may be mixed at once or in succession.

Curable Composition

The curable composition according to the present invention contains the monomer composition and a photoacid generator.

Photoacid Generator

The photoacid generator is a compound that generates an acid by light irradiation and is also called a "cationic photoinitiator". The photoacid generator includes a cationic moiety and an anionic moiety. The cationic moiety absorbs light. The anionic moiety acts as an acid source. Non-limiting examples of the photoacid generator include diazonium salt compounds, iodonium salt compounds, sulfonium salt compounds, phosphonium salt compounds, selenium salt compounds, oxonium salt compounds, ammonium salt compounds, bromine salt compounds, metallocene complexes, and iron-arene complexes. The curable composition may contain each of them alone or in combination.

Non-limiting examples of the cationic moieties in the sulfonium salt compounds include arylsulfonium ions such as (4-hydroxyphenyl)methylbenzylsulfonium ion, triphenylsulfonium ion, diphenyl[4-(phenylthio)phenyl]sulfonium ion, and tri-p-tolylsulfonium ion, of which triarylsulfonium ions are typified.

Non-limiting examples of the anionic moiety of the photoacid generator include $BF_4^-$, $CF_3SO_3^-$, $CH_3C_6H_4SO_3^-$, $CH_3(NO_2)C_6H_4SO_3^-$, $B(C_6F_5)_4^-$, $PF_6^-$, $[(Rf)_mPF_{6-m}]^-$ (where Rf represents, independently in each occurrence, alkyl except with fluorine atoms replacing 80% or more of hydrogen atoms of the alkyl; and m represents an integer of 1 to 5), $AsF_6^-$, $SbF_6^-$, $SbF_5OH^-$, halogenic anions, sulfonate anions, carboxylate anions, and sulfate anions.

Non-limiting examples of the photoacid generator for use in the present invention include compounds represented by the formulae:

[Chem. 9]

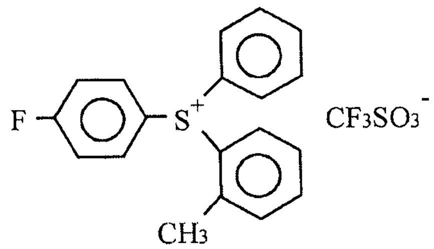

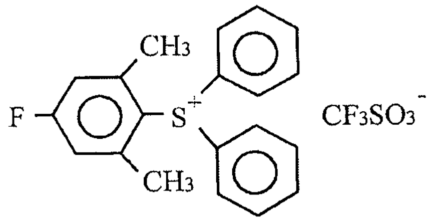

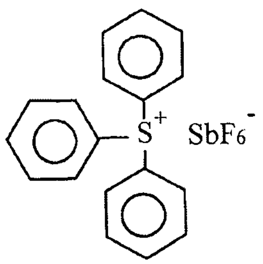

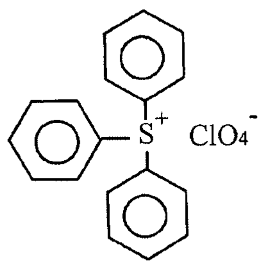

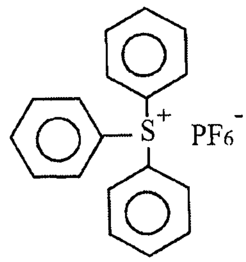

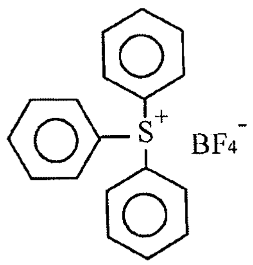

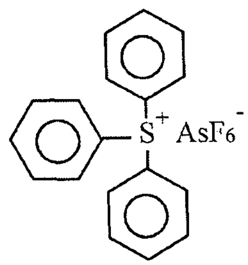

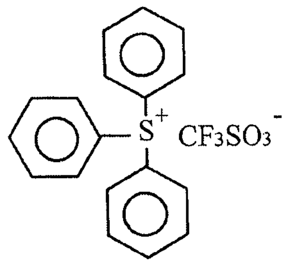

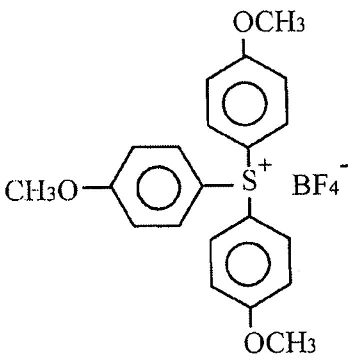

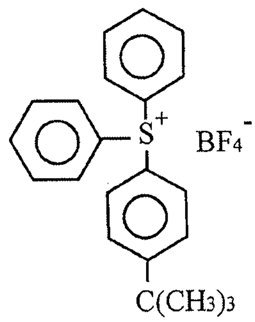

[Chem. 10]

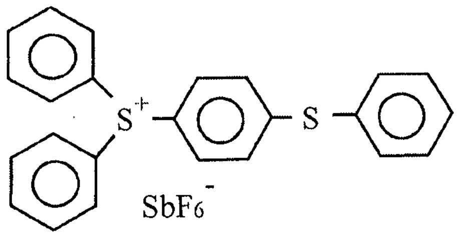
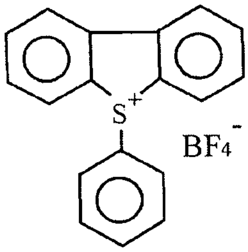
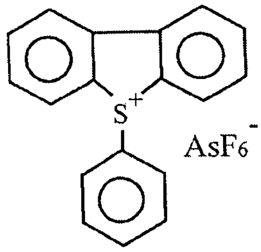

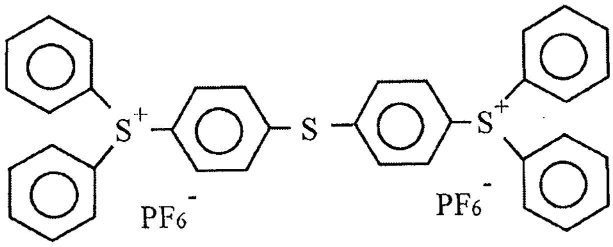
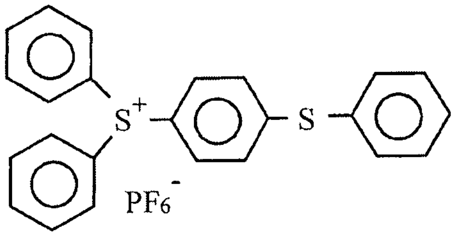

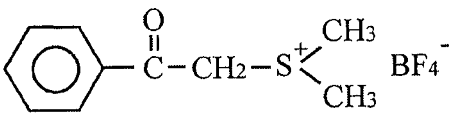
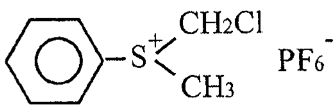

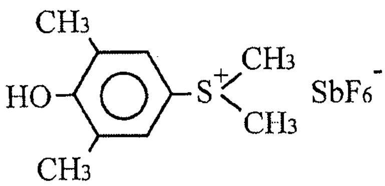
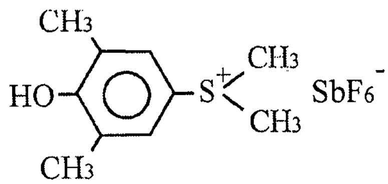

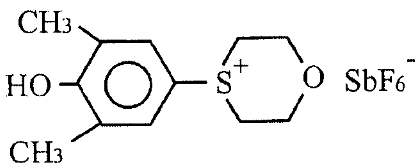
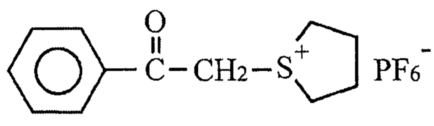

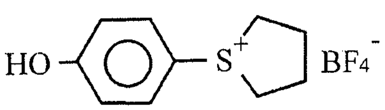
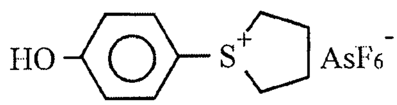

[Chem. 11]

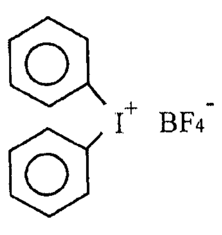
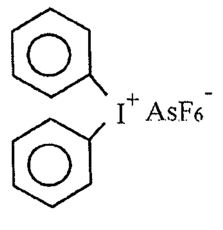
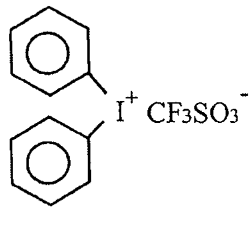

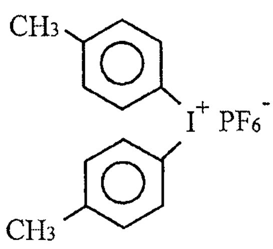
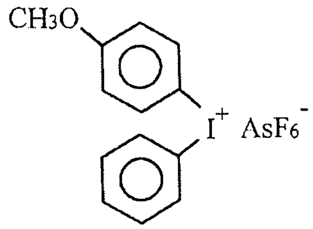
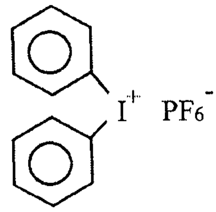

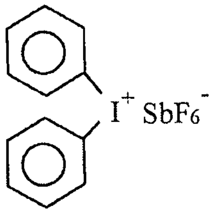
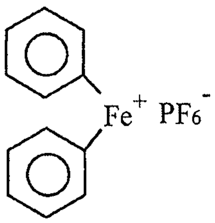
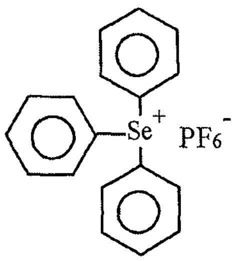

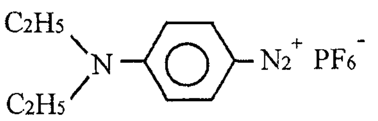
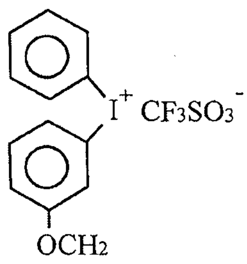

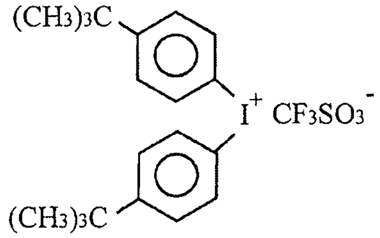
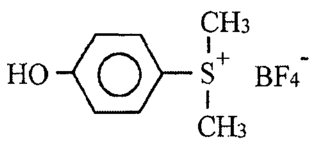

The photoacid generator for use in the present invention may be selected from commercial products available typically under the trade names: CYRACURE UVI-6970, CYRACURE UVI-6974, CYRACURE UVI-6990, and CYRACURE UVI-950 (each from Union Carbide Corporation, U.S.A.); IRGACURE 250, IRGACURE 261, IRGACURE 264, IRGACURE 270, and IRGACURE 290 (each from BASF SE); CG-24-61 (from Ciba Geigy Ltd.); ADEKA OPTOMER SP-150, ADEKA OPTOMER SP-151, ADEKA OPTOMER SP-170, and ADEKA OPTOMER SP-171 (each from ADEKA CORPORATION); DAICAT II (from Daicel Corporation); UVAC 1590 and UVAC 1591 (each from DAICEL-CYTEC Company, Ltd.); CI-2064, CI-2639, CI-2624, CI-2481, CI-2734, CI-2855, CI-2823, CI-2758, and CIT-1682 (each from Nippon Soda Co., Ltd.); PI-2074 (from Rhodia, toluylcumyliodonium tetrakis(pentafluorophenyl)borate); FFC509 (from 3M Company); BBI-102, BBI-101, BBI-103, MPI-103, BDS-105, TPS-103, MDS-103, MDS-105, MDS-203, MDS-205, DTS-102, DTS-103, NAT-103, NDS-103, BMS-105, and TMS-105 (each from Midori Kagaku Co., Ltd.); CD-1010, CD-1011, and CD-1012 (each from Sartomer Company, Inc., U.S.A.); CPI-100P, CPI-101A, CPI-110P, CPI-110A, and CPI-210S (each from San-Apro Ltd.); and UVI-6992 and UVI-6976 (each from The Dow Chemical Company).

The monomer composition may be present in a content of typically 50 to 99.9 weight percent, and preferably 70 to 99.5 weight percent, of the total weight (100 weight percent) of the curable composition according to the present invention.

The photoacid generator in the curable composition according to the present invention may be present in a proportion of typically 0.1 to 20 parts by weight, and preferably 0.5 to 10 parts by weight, per 100 parts by weight of the monomer composition.

The curable composition according to the present invention is preferably a solvent-free system, namely, is preferably approximately devoid of solvents. This is preferred because the curable composition can have better drying behavior, can be applied even to a substrate being susceptible to deterioration by solvents, and less suffers from odors generated due to volatilization of solvents. The curable composition may have a solvent content of typically 10 weight percent or less, preferably 5 weight percent or less, and particularly preferably 1 weight percent or less, of the total weight (100 weight percent) of the curable composition.

The curable composition according to the present invention may further contain any of other components as needed, in addition to the monomer composition and the photoacid generator. Non-limiting examples of the other components include known or common sensitizers (such as acridine compounds, benzoflavins, perylenes, anthracenes, thioxanthone compounds, and laser dyes), sensitizing auxiliaries, antioxidants, and stabilizers (such as amines). In particular, assume that the curable composition according to the present invention is to be used in applications where the curable composition is cured by irradiation with light from a UV-LED. In this case, the curable composition preferably contains a sensitizer alone or, as needed, in combination with a sensitizing auxiliary. This is preferred for better ultraviolet absorptivity of the photoacid generator to allow the curable composition to offer better curability. These components may be present in a content of typically 0.05 to 10 weight percent, and preferably 0.1 to 5 weight percent, of the total weight (100 weight percent) of the curable composition. When two or more different substances belonging to these components are present, the term "content" refers to the total content of them.

The curable composition according to the present invention has a surface tension (at 25°C and 1 atmospheric pressure) of typically 10 to 50 mN/m, and preferably 15 to 40 mN/m. The curable composition according to the present invention has a viscosity (at 25°C and a shear rate of 10 (1/s)) of typically 1 to 1000 mPa·s, preferably 3 to 500 mPa·s, particularly preferably 5 to 100 mPa·s, more preferably 5 to 50 mPa·s, and most preferably 5 to 20 mPa·s. The curable composition according to the present invention therefore has excellent dischargeability and/or excellent filling properties.

The curable composition according to the present invention can be rapidly cured by ultraviolet irradiation, even in the presence of oxygen and/or water, to form a cured product. The curable composition, when used in a UV-curable inkjet ink, therefore allows the ink to resist bleeding, to less cause odors, and to form an ink layer (ink film) having excellent print quality.

A light source for the ultraviolet ray is not limited, as long as being capable of applying light to the curable composition to generate an acid in the curable composition. The light source for use herein may be selected typically from UV-LEDs, mercury lamps such as low-, medium-, or highpressure mercury lamps, mercury xenon lamps, metal halide lamps, tungsten lamps, arc lamps, excimer lamps, excimer laser, semiconductor laser, YAG laser, laser systems using laser in combination with a nonlinear optical crystal, and high-frequency induction ultraviolet generators. The quantity (integrated irradiance) of ultraviolet rays to be irradiated is typically 10 to 1000 $mJ/cm^2$.

After ultraviolet irradiation, the curable composition according to the present invention may further be subjected to a heat treatment. The curable composition, when subjected to a heat treatment, can be cured with a still higher degree of cure. The heat treatment may be performed at a heating temperature of 40°C to 200°C for a heating time of 1 minute to 15 hours. Such a higher degree of cure can also be obtained by leaving the curable composition after ultraviolet irradiation left stand at room temperature (about 20°C) for 1 to 48 hours.

In addition, the curable composition according to the present invention can form a cured product having excellent adhesion to a wide variety of substrates. Non-limiting examples of the substrates include glass; metals such as aluminum foil and copper foil; plastics such as polyethylenes, polypropylenes, poly(ethylene terephthalate)s (PETs), vinyl chloride resins, and polycarbonates; natural rubber; isobutylene-isoprene rubber; foams typically of polyurethanes and polychloroprene rubber; wood; woven fabrics; nonwoven fabrics; cloth; paper such as woodfree paper, glassine paper, kraft paper, and Japanese paper; silicon wafers; ceramics; and composites of them.

The curable composition according to the present invention has the characteristic properties and is advantageously usable typically as or for UV-curable inkjet ink materials, coating materials, adhesives, encapsulants, civil engineering and construction materials, laminates and other electric/electronic components, photoresists, solder masks (solder resists), interlayer components for multilayer printed circuit boards, insulating materials, repairing materials for concrete buildings, casting materials, sealants, stereolithographic materials, and optical materials for optical components such as lenses and optical waveguides.

In particular, the curable composition according to the present invention is preferably used as UV-curable inkjet ink materials (such as a UV-curable inkjet transparent ink). Such a UV-curable inkjet transparent ink including the curable composition according to the present invention, when combined with a pigment and/or a dye, can form a variety of pigment/dye inks (pigment inks, dye inks, and inks containing both a pigment and a dye). The curable composition is also usable as or for priming inks and varnishing inks. The priming inks and varnishing inks are inks which are to be applied before and/or after the application of a pigment/dye ink and allow the pigment/dye ink to be more readily fixed

to the substrate surface and to form an ink layer with bright coloration and high image quality. The priming inks and varnishing inks also contribute to elimination or minimization of ink strike-through and offer better weatherability and better water resistance.

UV-Curable Inkjet Ink

The UV-curable inkjet ink (in particular, the pigment/dye ink) according to the present invention contains the curable composition and at least one selected from pigments and dyes (pigment and/or dye). The curable composition herein acts as a UV-curable inkjet transparent ink.

Pigments

The pigments for use herein can be selected, without limitation, from coloring materials that are generally known as pigments and are dispersible in the curable composition. The pigments each preferably have an average particle diameter of 300 nm or less. This is preferred because the resulting ink is dischargeable excellently, can fly satisfactorily, and offers excellent print reproducibility. The ink may contain each of different pigments alone or in combination.

The pigment may be selected from those having any of other properties such as magnetism, fluorescence, electroconductivity, and dielectricity, in addition to color developing and coloring abilities. In this case, the pigment can impart various functions to images.

Non-limiting examples of the pigments usable herein include inorganic pigments, organic pigments, and fluorescent pigments. Non-limiting examples of the inorganic pigments include earthen pigments such as ocher and amber; lapis lazuli; azurite; chalk; white wash; white lead; vermilion; ultramarine; viridian; cadmium red; carbonaceous pigments such as carbon black, carbon refined, and carbon nanotubes; metal oxide pigments such as iron black, cobalt blue, zinc oxide, titanium oxide, chromium oxide, and iron oxides; metal sulfide pigments such as zinc sulfide; metal sulfates; metal carbonates such as calcium carbonate and magnesium carbonate; metal silicates; metal phosphates; and metal powders such as aluminum powder, bronze powder, and zinc powder. Non-limiting examples of the organic pigments include insoluble azo pigments such as monoazo yellow, monoazo red, monoazo violet, disazo yellow, disazo orange, and pyrazolone pigments; soluble azo pigments such as azo yellow lake and azo lake red; benzimidazolone pigments; β-naphthol pigments; naphthol AS pigment; condensed azo pigments; quinacridone pigments such as quinacridone red and quinacridone magenta; perylene pigments such as perylene red and perylene scarlet; perinone pigments such as perinone orange; isoindolinone pigments such as isoindolinone yellow and isoindolinone orange; isoindoline pigments such as isoindoline yellow; dioxazine pigments such as dioxazine violet; thioindigo pigments; anthraquinone pigments; quinophthalone pigments such as quinophthalone yellow; metal complex pigments; diketopyrrolopyrrole pigments; phthalocyanine pigments such as phthalocyanine blue and phthalocyanine green; and dye lake pigments. Non-limiting examples of the fluorescent pigments include inorganic fluorophors and organic fluorophors.

Dyes

Non-limiting examples of the dyes include nitroaniline, phenyl monoazo, pyridone azo, quinophthalone, styryl, anthraquinone, naphthalimide azo, benzothiazolylazo, phenyl disazo, and thiazolylazo dyes.

The UV-curable inkjet ink according to the present invention may contain the pigment and/or dye in a proportion of typically 0.5 to 20 parts by weight, and preferably 1 to 10 parts by weight, per 100 parts by weight of the curable composition. When the ink contains two or more different substances belonging to these components, the term "proportion" refers to the total proportion of them.

The UV-curable inkjet ink according to the present invention may further contain a dispersant so as to offer better dispersibility of the pigment and/or dye. Non-limiting examples of the dispersant include nonionic surfactants, ionic surfactants, charging agents, and polymeric dispersants (such as commercial products available under trade names Solsperse 24000 and Solsperse 32000, from Avecia Ltd.). The ink may contain each of them alone or in combination.

The dispersant may be present in a proportion of typically 1 to 50 parts by weight, and preferably 3 to 30 parts by weight, per 100 parts by weight of the pigment and/or dye.

The UV-curable inkjet ink according to the present invention, as containing the curable composition, can form an ink layer with extremely high definition at high speed in an air atmosphere, where the ink layer can be formed without limitations on humidity conditions and substrates, while less causing odors.

Examples

The present invention will be illustrated in further detail with reference to several examples below.

Example 1

Materials, i.e., 50 parts by weight of ALOX, 20 parts by weight of CELLOXIDE 2021P, 30 parts by weight of TEGDVE, and 5 parts by weight of a photoacid generator were mixed and yielded a curable composition (1). This had a surface tension (at 25°C and 1 atmospheric pressure) of 20.7 mN/m and a viscosity (at 25°C and a shear rate of 10 (1/s)) of 11 mPa·s).

Curability Evaluation

The prepared curable composition (1) was applied to a glass plate to form a coating having a thickness of 5 μm, and irradiated with ultraviolet rays using a mercury-xenon lamp (trade name LC8 LIGHTNINGCURE L9588, supplied by Hamamatsu Photonics K.K.) as a light source. An integrated irradiance (in $mJ/cm^2$) until the coating became tack-free was measured, on the basis of which the curability was evaluated. Specifically, an integrated irradiance until the coating became tack-free or the coating remained without separation from the glass plate upon rubbing of the coating surface with a ply of Kimwipes (registered trademark) was measured. The integrated irradiance is an integrated irradiance necessary for curing of such a curable composition approximately devoid of water (water-free curable composition).

Curability Evaluation in the Presence of Water

The curable composition (1) (100 parts by weight) was combined with and stirred with water (5 parts by weight) and yielded a water-containing curable composition (1).

An integrated irradiance (in $mJ/cm^2$) until the resulting coating became tack-free was measured by a procedure similar to the procedure in the above-mentioned curability evaluation, except for using the water-containing curable composition (1) instead of the curable composition (1). The rate of increase in integrated irradiance caused by water addition was calculated according to an expression below, to evaluate curability in the presence of water according to criteria as follows.

$$\text{Rate of increase (\%) in integrated irradiance} = \{((\text{Integrated irradiance necessary for curing of water-containing curable composition})/(\text{Integrated irradiance necessary for curing of water-free curable composition})) - 1\} \times 100$$

Evaluation criteria for curability in the presence of water:

Poor curability (Poor): rate of increase in integrated irradiance of 20% or more;
Good curability (Good): rate of increase in integrated irradiance of from 10% to less than 20%; and
Very good curability (VG): rate of increase in integrated irradiance of less than 10%.

Substrate Adhesion Evaluation

The curable composition (1) was applied to a substrate (glass plate or PET plate) to form a coating having a thickness of 5 μm, irradiated with ultraviolet rays using a mercury-xenon lamp as a light source until the coating became tack-free, and yielded a laminate of the coating and the glass plate, and a laminate of the coating and the PET plate.

Each eleven (11) slits were made on the coating surface of each of the laminates lengthwise and crosswise at 1-mm intervals in a grid manner and yielded samples each having hundred 1-mm square crosscuts. A cellophane adhesive tape (trade name Cellotape (registered trademark), supplied by Nichiban Co., Ltd., 24 mm wide) was laminated onto the crosscuts by one reciprocating movement of a 2-kg roller, and then removed by quickly pulling the tape in a direction perpendicular to the substrate at an ambient temperature of 20°C. The adhesion was evaluated on the basis of the number of crosscuts remained without separation according to the following criteria (in conformity with JIS K-5400:1990):
Substrate Adhesion Evaluation Criteria:

Very good substrate adhesion (VG): 0 to 15 crosscuts were separated from the substrate;
Good substrate adhesion (Good): 16 to 30 crosscuts were separated from the substrate; and
Poor substrate adhesion (Poor): 31 to 100 crosscuts were separated from the substrate.

Examples 2 to 13 and Comparative Examples 1 to 3

Procedures similar to that in Example 1 were performed, except for employing the formulations of monomer compositions given in tables below. Results are collectively presented in the tables.

[Table 1]

TABLE 1

| | Curable composition | | | | Curability (integrated irradiance in $mJ/cm^2$) | | Curability in the presence of water | Substrate adhesion | |
|---|---|---|---|---|---|---|---|---|---|
| | Monomer composition | | | Photoacid generator (part by weight) | | | | | |
| | Oxetane compound (part by weight) | Epoxy compound (part by weight) | Vinyl ether compound (part by weight) | | Water-free composition | Composition containing 5% water | | Glass plate | PET plate |
| Example 1 | ALOX (50) | CELLOXIDE 2021P (20) | TEGDVE (30) | 5 | 400 | 425 | VG | VG | VG |
| Example 2 | ALOX (50) | CELLOXIDE 2021P (20) | 4CHDVE (30) | 5 | 300 | 300 | VG | Good | VG |
| Example 3 | ALOX (50) | CELLOXIDE 2021P (50) | - | 5 | 300 | 300 | VG | VG | VG |
| Example 4 | ALOX (70) | CELLOXIDE 2021P (30) | - | 5 | 350 | 350 | VG | VG | VG |
| Example 5 | ALOX (30) | CELLOXIDE 2021P (20) | TEGDVE (50) | 5 | 400 | 450 | Good | VG | VG |
| Example 6 | ALOX (50) | CELLOXIDE 2021P (20) | CHDMDVE (30) | 5 | 350 | 400 | Good | Good | VG |
| Example 7 | ALOX (70) | - | TEGDVE (30) | 5 | 400 | 450 | Good | Good | VG |
| Example 8 | ALOX (70) | - | 4CHDVE (30) | 5 | 350 | 400 | Good | Good | Good |
| Example 9 | EHOX (50) | CELLOXIDE 2021P (20) | TEGDVE (30) | 5 | 450 | 500 | Good | VG | VG |
| Example 10 | EHOX (50) | CELLOXIDE 2021P (50) | - | 5 | 350 | 350 | Good | VG | VG |
| Comp. Ex. 1 | OXT-212 (30) | CELLOXIDE 2021P (20) | TEGDVE (50) | 5 | 500 | >1000 | Poor | VG | VG |
| Comp. Ex. 2 | OXT-212 (70) | - | TEGDVE (30) | 5 | 600 | >1000 | Poor | Good | Good |

(continued)

| | Curable composition | | | | Curability (integrated irradiance in mJ/cm$^2$) | | Curability in the presence of water | Substrate adhesion | |
|---|---|---|---|---|---|---|---|---|---|
| | Monomer composition | | | Photoacid generator (part by weight) | | | | | |
| | Oxetane compound (part by weight) | Epoxy compound (part by weight) | Vinyl ether compound (part by weight) | | Water-free composition | Composition containing 5% water | | Glass plate | PET plate |
| Comp. Ex. 3 | OXT-212 (50) | CELLOXIDE 2021P (20) | 4CHDVE (30) | 5 | 400 | 500 | Poor | Good | VG |

[Table 2]

TABLE 2

| | Curable composition | | | | Curability (integrated irradiance in mJ/cm$^2$) | | Curability in the presence of water | Substrate adhesion | |
|---|---|---|---|---|---|---|---|---|---|
| | Monomer composition | | | Photoacid generator (part by weight) | | | | | |
| | Oxetane compound (part by weight) | Epoxy compound (part by weight) | Vinyl ether compound (part by weight) | | Water-free composition | Composition containing 5% water | | Glass plate | PET plate |
| Example 11 | ALOX (50) | CELLOXIDE 2021P (10) X-22-163 (10) | TEGDVE (30) | 5 | 500 | 500 | VG | VG | VG |
| Example 12 | ALOX (50) | CELLOXIDE 2021P (10) EP0419 (10) | 4CHDVE (30) | 5 | 350 | 350 | VG | VG | VG |
| Example 13 | ALOX (50) | CELLOXIDE 2021P (10) X-22-163 (40) | - | 5 | 350 | 350 | VG | VG | VG |

The compounds used in the examples and comparative examples are as follows.

ALOX: 3-allyloxyoxetane represented by the formula:

[Chem. 12]

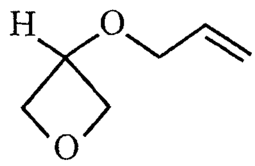

EHOX: 3-(2-ethylhexyloxy)oxetane represented by the formula:

[Chem. 13]

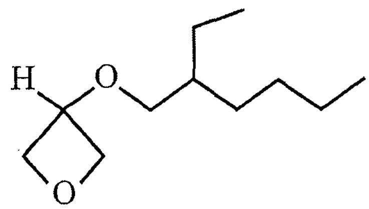

OXT-212: 3-ethyl-3-[(2-ethylhexyloxy)methyl]oxetane, trade name ARON OXETANE OXT-212, supplied by Toagosei Co., Ltd.

Epoxy Compounds

CELLOXIDE 2021P: 3,4-epoxycyclohexylmethyl (3,4-epoxy)cyclohexanecarboxylate, trade name CELLOXIDE 2021P, supplied by Daicel Corporation
X-22-163: a silicone modified with epoxy at both termini, having an epoxy equivalent of 200 g/mol, trade name X-22-163, supplied by Shin-Etsu Chemical Co., Ltd.
EP0419: a polyorganosilsesquioxane containing an epoxy group (glycidyloxypropyl group) and an isooctyl group, having a molecular weight of 1324.37, trade name EP0419, supplied by Toyotsu Chemiplas Corporation

Vinyl Ether Compounds

TEGDVE: triethylene glycol divinyl ether, trade name TEGDVE, supplied by Nippon Carbide Industries, Co., Inc.
4CHDVE: cyclohexanediol divinyl ether, trade name 4CHDVE, supplied by Daicel Corporation
CHDMDVE: cyclohexanedimethanol divinyl ether, trade name CHDMDVE, supplied by Nippon Carbide Industries, Co., Inc.

Photoacid Generator

trade name CPI-110P, supplied by San-Apro Ltd., a 99.5:0.5 mixture of diphenyl[4-(phenylthio)phenyl]sulfonium hexafluorophosphate and thiodi-p-phenylenebis(diphenylsulfonium) bis(hexafluorophosphate)

Industrial Applicability

The curable composition according to the present invention has low viscosity and offers excellent dischargeability before ultraviolet irradiation, and can be rapidly cured upon ultraviolet irradiation, even in the presence of oxygen and/or water, to form a cured product having excellent adhesion to a wide variety of substrates. The curable composition

resists deterioration in curability even when absorbing moisture from the air during the storage process. Namely, the curable composition has excellent storage stability. In addition, the curable composition according to the present invention, as having excellent curability, less causes monomers to remain as unreacted, and significantly less causes odors derived from such unreacted monomers. Thus, the curable composition is advantageously usable for UV-curable inkjet inks.

## Claims

1. A curable composition comprising:

   a monomer composition comprising at least one cationically curable monomer, the at least one cationically curable monomer comprising at least one of 3-allyloxyoxetane and 3-(2-ethylhexyloxy)oxetane, the at least one of 3-allyloxyoxetane and 3-(2-ethylhexyloxy)oxetane being present in a total content of 5 weight percent or more of the total weight of the monomer composition; and
   a photoacid generator.

2. The curable composition according to claim 1, wherein the at least one cationically curable monomer further comprises an epoxy compound.

3. The curable composition according to claim 2, wherein the epoxy compound is present in a content of 5 to 80 weight percent of the total weight of the monomer composition.

4. The curable composition according to any one of claims 1 to 3, wherein the at least one cationically curable monomer further comprises a vinyl ether compound.

5. The curable composition according to claim 4, wherein the vinyl ether compound is present in a content of 5 to 80 weight percent of the total weight of the monomer composition.

6. The curable composition according to any one of claims 1 to 5, further comprising a sensitizer alone or in combination with a sensitizing auxiliary.

7. The curable composition according to any one of claims 1 to 6, which has a surface tension (at 25°C and 1 atmospheric pressure) of 10 to 50 mN/m and a viscosity (at 25°C and a shear rate of 10 (1/s)) of 1 to 1000 mPa·s.

8. Use of the curable composition according to any one of claims 1 to 7 in a UV-curable inkjet ink.

9. A UV-curable inkjet ink comprising:

   the curable composition according to any one of claims 1 to 7; and
   at least one selected from the group consisting of pigments and dyes.

10. The UV-curable inkjet ink according to claim 9, further comprising a dispersant.

## Patentansprüche

1. Härtbare Zusammensetzung, umfassend:

   eine Monomer-Zusammensetzung, umfassend mindestens ein kationisch härtbares Monomer, wobei das mindestens eine kationisch härtbare Monomer mindestens eines aus 3-Allyloxyoxetan und 3-(2-Ethylhexyloxy)oxetan umfasst, wobei das mindestens eine aus 3-Allyloxyoxetan und 3-(2-Ethylhexyloxy)oxetan in einem Gesamtgehalt von 5 Gewichtsprozent oder mehr des Gesamtgewichts der Monomer-Zusammensetzung vorliegt, und
   einen photoaktivierbaren Säurebildner.

2. Härtbare Zusammensetzung gemäß Anspruch 1, wobei das mindestens eine kationisch härtbare Monomer ferner eine Epoxyverbindung umfasst.

3. Härtbare Zusammensetzung gemäß Anspruch 2, wobei die Epoxyverbindung in einem Gehalt von 5 bis 80 Gewichtsprozent des Gesamtgewichts der Monomer-Zusammensetzung vorliegt.

**4.** Härtbare Zusammensetzung gemäß einem der Ansprüche 1 bis 3, wobei das mindestens eine kationisch härtbare Monomer ferner eine Vinyletherverbindung umfasst.

**5.** Härtbare Zusammensetzung gemäß Anspruch 4, wobei die Vinyletherverbindung in einem Gehalt von 5 bis 80 Gewichtsprozent des Gesamtgewichts der Monomer-Zusammensetzung vorliegt.

**6.** Härtbare Zusammensetzung gemäß einem der Ansprüche 1 bis 5, ferner umfassend ein Sensibilisierungsmittel, allein oder in Kombination mit einem sensibilisierenden Hilfsmittel.

**7.** Härtbare Zusammensetzung gemäß einem der Ansprüche 1 bis 6, welche eine Oberflächenspannung (bei 25 °C und einem Atmosphärendruck von 1) von 10 bis 50 mN/m und eine Viskosität (bei 25 °C und einer Schergeschwindigkeit von 10 (1/s)) von 1 bis 1000 mPa·s aufweist.

**8.** Verwendung der härtbaren Zusammensetzung gemäß einem der Ansprüche 1 bis 7 in einer UV-härtbaren Tintenstrahltinte.

**9.** UV-härtbare Tintenstrahltinte, umfassend:

die härtbare Zusammensetzung gemäß einem der Ansprüche 1 bis 7 und
mindestens eines, ausgewählt aus der Gruppe, bestehend aus Pigmenten und Farbstoffen.

**10.** UV-härtbare Tintenstrahltinte gemäß Anspruch 9, ferner umfassend ein Dispergiermittel.

## Revendications

**1.** Composition durcissable comprenant :

une composition de monomère(s) comprenant au moins un monomère durcissable par voie cationique, l'au moins un monomère durcissable par voie cationique comprenant l'un au moins parmi le 3-allyloxyoxétane et le 3-(2-éthylhexyloxy)oxétane, l'au moins un parmi le 3-allyloxyoxétane et le 3-(2-éthylhexyloxy)oxétane étant présent en une teneur totale de 5 pour cent ou plus du poids total de la composition de monomère(s) ; et
un générateur de photo-acide.

**2.** Composition durcissable selon la revendication 1, dans laquelle l'au moins un monomère durcissable par voie cationique comprend en outre un composé époxy.

**3.** Composition durcissable selon la revendication 2, dans laquelle le composé époxy est présent en une teneur de 5 à 80 pour cent en poids du poids total de la composition de monomère(s).

**4.** Composition durcissable selon l'une quelconque des revendications 1 à 3, dans laquelle l'au moins un monomère durcissable par voie cationique comprend en outre un composé éther de vinyle.

**5.** Composition durcissable selon la revendication 4, dans laquelle le composé éther de vinyle est présent en une teneur de 5 à 80 pour cent en poids du poids total de la composition de monomère(s).

**6.** Composition durcissable selon l'une quelconque des revendications 1 à 5, comprenant en outre un agent sensibilisant seul ou associé à un auxiliaire de sensibilisation.

**7.** Composition durcissable selon l'une quelconque des revendications 1 à 6, qui a une tension de surface (à 25 °C et sous une pression de 1 atmosphère) de 10 à 50 mN/m et une viscosité (à 25 °C et sous un taux de cisaillement de 10(1/s)) de 1 à 1000 mPa·s.

**8.** Utilisation de la composition durcissable selon l'une quelconque des revendications 1 à 7 dans une encre pour jet d'encre durcissable aux UV.

9. Encre pour jet d'encre durcissable aux UV comprenant :

la composition durcissable selon l'une quelconque des revendications 1 à 7 ; et
au moins un composé choisi dans le groupe constitué par des pigments et des colorants.

10. Encre pour jet d'encre durcissable aux UV selon la revendication 9, comprenant en outre un dispersant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005154734 A
- JP 2007211098 A
- JP 2007211099 A
- WO 2014046095 A1
- US 4009182 A